# EUROPÄISCHE PATENTSCHRIFT

(11) **EP 3 003 828 B1**
(45) Veröffentlichungstag und Bekanntmachung des Hinweises auf die Patenterteilung: **09.01.2019**
(21) Anmeldenummer: 14724450.3
(22) Anmeldetag: 15.05.2014
(51) Int. Cl.: B62D 21/11, B62D 21/12, B60K 1/00, B62D 29/04, B62D 35/02, B60G 3/20, B60K 7/00

(54) **FAHRZEUG**
VEHICLE
VÉHICULE

(30) Priorität: 07.06.2013 DE 102013210705
(43) Veröffentlichungstag der Anmeldung: 13.04.2016
(73) Patentinhaber: Bayerische Motoren Werke Aktiengesellschaft, 80809 München (DE)
(72) Erfinder: KÖNIG, Roland, 82392 Habach (DE)
(74) Vertreter: Schmidt, Günter H. H.
(86) Internationale Anmeldenummer: PCT/EP2014/059998
(87) Internationale Veröffentlichungsnummer: WO 2014/195105

(56) Entgegenhaltungen:
- EP-A1- 1 690 779
- WO-A1-2007/028372
- WO-A1-2014/108157
- DE-A1-102006 013 554
- DE-A1-102011 005 564
- DE-A1-102011 081 836
- DE-A1-102011 101 408
- US-A- 5 560 651

## Beschreibung

Vorliegende Erfindung betrifft ein Fahrzeug nach dem Oberbegriff des Anspruchs 1 und insbesondere die Ausbildung eines Achsträgers des Fahrzeugs. Das Fahrzeug ist insbesondere als Kraftfahrzeug mit vier Rädern ausgebildet und als nächstkommender Stand der Technik wird die DE 10 2006 013 554 A1 erachtet. Die DE 10 2011 101 408 und die nachveröffentlichte WO 2014/108157 A1 offenbaren ebenfalls eine Achsträgeranordnung nach dem Oberbegriff des Anspruchs 1.

Üblicherweise werden Achsträger, insbesondere Hinterachsträger, voll selbsttragend ausgeführt und mit dem Fahrzeug über mehrere Gummilager verbunden. Dies dient vor allem der akustischen Entkopplung des Hinterachsgetriebes bei verbrennungsmotorisch getriebenen Fahrzeugen. Dabei müssen sowohl die Karosserie als auch der Achsträger voll selbsttragend ausgelegt sein, um trotz der sie verbindenden Gummielemente ausreichend steif und betriebsfest zu sein. Dies bedingt entsprechendes Gewicht.

Es ist Aufgabe vorliegender Erfindung, ein Fahrzeug anzugeben, das bei kostengünstigem Aufbau und wartungsarmem Betrieb möglichst leichtbauend ist und gleichzeitig eine ausreichende Betriebsfestigkeit aufweist.

Die Lösung der Aufgabe erfolgt durch die Merkmale des unabhängigen Anspruchs. Die abhängigen Ansprüche haben vorteilhafte Ausgestaltungen der Erfindung zum Gegenstand.

Somit wird die Aufgabe gelöst durch ein Fahrzeug, insbesondere ein Kraftfahrzeug, umfassend eine Karosserie, ein unter der Karosserie angeordnetes Flächenbauteil und zumindest eine Achsträgeranordnung. Die Achsträgeranordnung ist entweder für die zwei vorderen oder die zwei hinteren Radaufhängungen vorgesehen. Insbesondere ist die Achsträgeranordnung für die Hinterachse ausgebildet. Die Achsträgeranordnung umfasst eine linke und eine rechte sowie eine weitere mittige Lenkeraufnahme. Die Lenkeraufnahmen dienen jeweils zur Anbindung zumindest eines Lenkers einer Radaufhängung. An der linken und rechten Radaufhängung ist jeweils ein Rad montierbar. Erfindungsgemäß ist vorgesehen, dass drei separate, d.h. nicht direkt miteinander verbundene Lenkeraufnahmen jeweils an der Karosserie und an dem Flächenbauteil befestigt sind. Dementsprechend befinden sich die Lenkeraufnahmen zwischen der Karosserie und dem Flächenbauteil. Darüber hinaus ist vorgesehen, dass die Lenkeraufnahmen separate Bauteile sind. Die beiden eparaten Lenkeraufnahmen sind nicht direkt miteinander verbunden. Die Lenkeraufnahmen für sich genommen stellen keine tragende Struktur dar. Erst die Verbindung der Lenkeraufnahmen mit der Karosserie und dem Flächenbauteil führt zu einer tragenden Struktur, an die die Radaufhängungen mittels der Lenker angebunden werden können. Zwischen den Lenkeraufnahmen sind keine Querträger vorgesehen. Lediglich über die Karosserie und über das Flächenbauteil erfolgt eine indirekte Verbindung der Lenkeraufnahmen.

Das Flächenbauteil ist erfindungsgemäß als Unterboden, genauer als eine Abschnitt des gesamten Fahrzeug-Unterbodens ausgebildet. Insbesondere bildet dieser Unterboden einen unteren aerodynamischen Abschluss des Fahrzeugs. Das Flächenbauteil ist somit nicht nur ein Schubfeld, sondern dient gleichzeitig auch als Unterboden, insbesondere zur Verbesserung der Aerodynamik des Fahrzeugs. Da erfindungsgemäß das Flächenbauteil notwendig ist, um zusammen mit den Lenkeraufnahmen und der Karosserie eine tragende Struktur darzustellen, ist ein sicherer Betrieb des Fahrzeugs ohne den Unterboden praktisch nicht möglich. Die Ausbildung des Unterbodens als aerodynamischer Abschluss des Fahrzeugs ermöglicht einen energieeffizienten Betrieb des Fahrzeugs, und somit insbesondere eine Reichweitenerhöhung. Im Stand der Technik ist die Achsaufhängung durch eine gummielastische Verbindung relativ zur Karosserie beweglich. Deshalb ist im Stand der Technik eine Befestigung eines fahrzeugfesten, geschlossenen Unterbodens am Achsträger nicht ohne weitere Maßnahme möglich. Erfindungsgemäß ist dies jedoch möglich, da die Lenkeraufnahmen und somit auch das Flächenbauteil steif mit der Karosserie verbindbar sind.

Es gibt es keine separaten, selbsttragenden Strukturen, wie beispielsweise eine Karosserie und einen selbsttragenden Hinterachsträger. Im Rahmen der Erfindung wurde erkannt, dass kein selbsttragender Achsträger notwendig ist, wenn ein entsprechendes Flächenbauteil mit in die gesamte tragende Struktur eingebunden wird. Dadurch ergibt sich eine erhebliche Gewichts- und Kosteneinsparung am Fahrzeug.

Als ein erfinderisches Element wurde bereits eine mittige Lenkeraufnahme genannt. Die mittige Lenkeraufnahme wird auch als Querstruktur bezeichnet. Insbesondere befindet sich die mittige Lenkeraufnahme, in Fahrtrichtung betrachtet, hinter der linken und rechten Lenkeraufnahme. Die mittige Lenkeraufnahme dient zur Anbindung zumindest eines Lenkers der linken Radaufhängung und zumindest eines Lenkers der rechten Radaufhängung. Auch die mittige Lenkeraufnahme ist an der Karosserie und am Flächenbauteil befestigt und befindet sich somit zwischen der Karosserie und dem Flächenbauteil.

Im Folgenden werden vorteilhafte Ausgestaltungen der Lenkeraufnahmen beschrieben. Dabei ist die Ausgestaltung jeweils für zumindest eine der drei Lenkeraufnahmen vorgesehen.

Bevorzugt ist vorgesehen, dass zumindest eine der Lenkeraufnahmen steif mit der Karosserie verbunden ist. Des Weiteren ist bevorzugt vorgesehen, dass zumindest eine der Lenkeraufnahmen steif mit dem Flächenbauteil verbunden ist. Die steife Verbindung erfolgt dabei bevorzugt über eine Verschraubung. Für die steife Verbindung wird insbesondere auf gummielastische Lager verzichtet. Durch die Verwendung entsprechend guter Gummilager zwischen den Lenkern und der Lenkeraufnahme können die Lenkeraufnahmen steif mit dem Flächenbauteil und/oder mit der Karosserie verbunden werden.

Des Weiteren ist bevorzugt vorgesehen, dass zumindest eine der Lenkeraufnahmen ein Lager für eine das Fahrzeug antreibende elektrische Maschine umfasst. Insbesondere weist jede der drei Lenkeraufnahmen jeweils ein Lager auf, so dass die elektrische Maschine zwischen den drei Lenkeraufnahmen an drei Punkten aufgenommen ist. Ein entscheidender Vorteil der Erfindung ist, dass zwischen den drei Lenkeraufnahmen ein relativ großer Bauraum verbleibt. In diesem Bauraum kann ohne Weiteres eine entsprechende elektrische Maschine, auch mit Getriebe und Differential, angeordnet werden. Dementsprechend ist das Fahrzeug vorzugsweise als Hybridfahrzeug oder Elektrofahrzeug ausgebildet.

Bevorzugt ist vorgesehen, dass das Flächenbauteil zerstörungsfrei lösbar mit allen drei Lenkeraufnahmen verbunden ist. Die zerstörungsfrei lösbare Verbindung erfolgt insbesondere über Verschraubungen. So kann das als Unterboden ausgebildete Flächenbauteil mit geringem Aufwand zu Wartungszwecken demontiert und wieder montiert werden. Insbesondere bei Anordnung eines Motors, vorzugsweise Elektromotors, zwischen den Lenkeraufnahmen, ist durch die Demontage des Unterbodens der Motor direkt zugänglich.

Ferner bevorzugt ist vorgesehen, dass die Karosserie zerstörungsfrei lösbar mit allen drei Lenkeraufnahmen verbunden, vorzugsweise verschraubt, ist. Durch diese lösbare Verbindung ist eine einfache Montage und Demontage gegeben. Ferner können durch die Verschraubung unterschiedliche Materialien problemlos miteinander verbunden werden.

Das als Unterboden bzw. als ein Abschnitt desselben ausgebildete Flächenbauteil ist vorzugsweise an zumindest einem Karosserieanbindungspunkt zerstörungsfrei lösbar mit der Karosserie verbunden, vorzugsweise verschraubt. Um die Demontagemöglichkeit und somit die Zugänglichkeit zum Motor bestmöglich zu gestallten, sollte der Unterboden auch von der Karosserie zerstörungsfrei lösbar sein.

Das Flächenbauteil ist vorzugsweise strukturversteifend ausgebildet. Dies bedeutet, dass erst durch die Befestigung der Lenkeraufnahmen an dem Flächenbauteil und an der Karosserie die Achsträgeranordnung tragfähig ist.

Die gesamte Struktur wird also erst durch die Verschraubung der Einzelkomponenten miteinander und mit der Karosserie tragfähig.

Das Flächenbauteil ausgebildet als Unterboden ist vorzugsweise so groß, dass es die Räder teilweise umgreift. Dementsprechend sind im Flächenbauteil Aussparungen für die Räder des Fahrzeugs vorgesehen.

Das Flächenbauteil ist insbesondere nicht nur ein kleines Schubfeld innerhalb des Achsträgers, sondern erstreckt sich bevorzugt über zumindest 10%, vorzugsweise zumindest über 20%, besonders vorzugsweise zumindest über 30%, der Fläche einer senkrechten Projektion des Fahrzeugs.

Das Flächenbauteil ist bevorzugt zusammengesetzt aus einem Plattenelement und einer das Plattenelement verstärkenden Versteifungsstruktur. Die Versteifungsstruktur ist auf das Plattenelement aufgesetzt oder in das Plattenelement integriert. Insbesondere ist das Plattenelement stellenweise dicker ausgebildet, wobei die dicken Anteile die Versteifungsstruktur bilden.

Besonders bevorzugt ist das Plattenelement eine Sandwichstruktur. Durch verschieden dickes Kernmaterial, z.B. Schaum oder Waben, kann die Verstärkungsstruktur direkt in das Plattenelement integriert werden.

Insbesondere weist das vollständige Flächenbauteil eine maximale Dicke von 150 mm, vorzugsweise von 50 mm, besonders vorzugsweise von 20mm, auf, so dass über dem Flächenbauteil ausreichend Bauraum und unter dem Flächenbauteil ausreichend Bodenfreiheit gegeben ist.

Die mittige Lenkeraufnahme ist vorzugsweise an zwei Verbindungsstellen mit dem Flächenbauteil und an zwei Karosserieanbindungspunkten mit der Karosserie verbunden, wobei die mittige Lenkeraufnahme bezüglich dieser vier Krafteinleitungspunkte (zwei Verbindungsstellen und zwei Karosserieanbindungspunkte) zumindest annähernd biegemomentfrei ausgestaltet ist. Die biegemomentfreie Ausgestaltung gilt in erster Linie für Kräfte senkrecht zur Fahrzeuglängsrichtung. Dies wird vorzugsweise wie folgt erreicht: zwei gedankliche Linien (Hilfslinien) verlaufen, entsprechend den Kraftpfaden, jeweils durch einen Karosserieanbindungspunkt und die diagonal gegenüberliegende Verbindungsstelle. Entlang dieser beiden Linien ist Material der mittigen Lenkeraufnahme vorhanden, d.h. es sind an diesen Linien keine oder nur geringfügige Aussparungen vorgesehen. Für eine zumindest annähernd biegemomentfreie Ausgestaltung ist bevorzugt vorgesehen, dass über zumindest 50%, vorzugsweise zumindest 60%, der Gesamtlänge dieser Linien Material vorhanden ist. Ferner ist bevorzugt vorgesehen, dass am Schnittpunkt der beiden Linien Material vorhanden ist.

Die verschiedenen Bauteile des vorgestellten Fahrzeugs können aus Metall gefertigt werden. Alternativ dazu ist bevorzugt vorgesehen, zumindest eine der Lenkeraufnahmen und/oder das Flächenbauteil aus Pressverbundmaterial oder Faserverbundwerkstoff zu fertigen. Als Faserverbundwerkstoff wird insbesondere faserverstärkter Kunststoff verwendet. Darüber hinaus ist vorgesehen, die Faserverbundwerkstoffe und die Pressverbundmaterialien miteinander zu kombinieren.

Weitere Einzelheiten, Merkmale und Vorteile der Erfindung ergeben sich aus der nachfolgenden Beschreibung und den Figuren. Es zeigen:
- Figur 1: eine schematisch vereinfachte Ansicht eines erfindungsgemäßen Fahrzeugs gemäß einem Ausführungsbeispiel,
- Figur 2: ein erstes Detail des erfindungsgemäßen Fahrzeugs gemäß dem Ausführungsbeispiel,
- Figur 3: ein zweites Detail des erfindungsgemäßen Fahrzeugs gemäß dem Ausführungsbeispiel, und
- Figur 4: eine mittige Lenkeraufnahme des erfindungsgemäßen Fahrzeugs gemäß dem Ausführungsbeispiel.

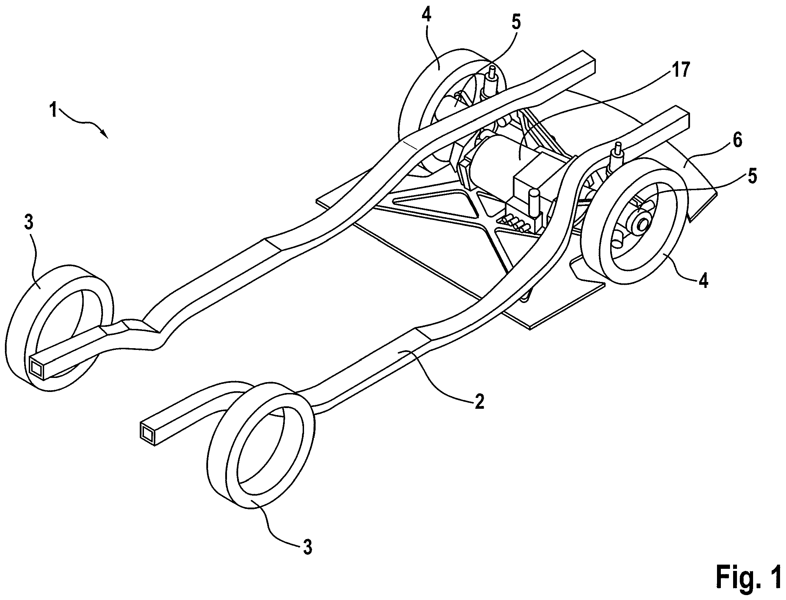

Figur 1 zeigt ein Fahrzeug 1. Vereinfacht und rein schematisch dargestellt sind eine Karosserie 2, zwei vordere Räder 3 und zwei hintere Räder 4. Die hinteren Räder 4 befinden sich an einer Achsträgeranordnung 5. Des Weiteren umfasst das Fahrzeug 1 ein Flächenbauteil 6, ausgebildet als Unterboden. Der Unterboden bildet einen aerodynamisch optimierten unteren Abschluss des Fahrzeugs 1.

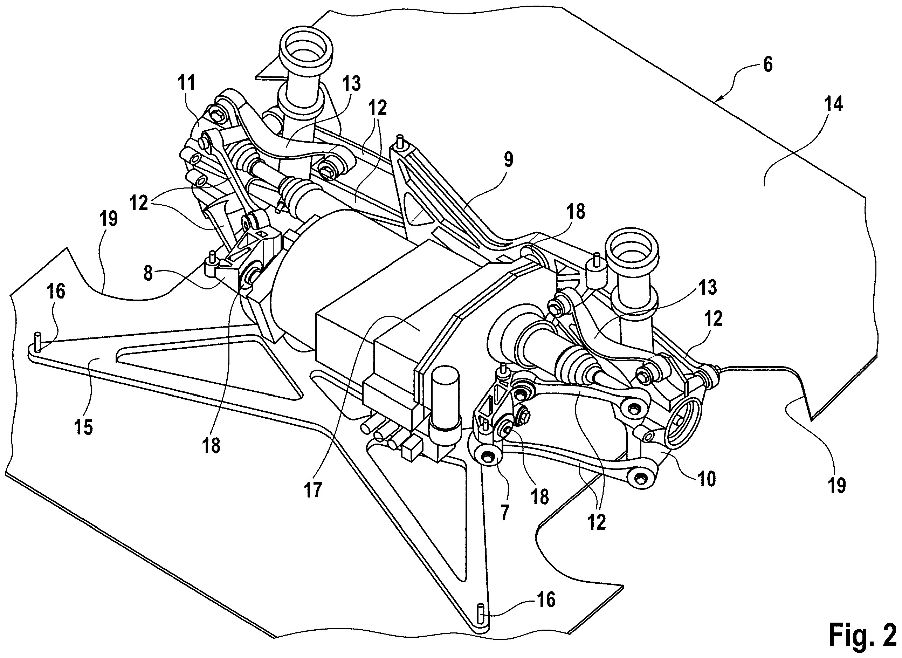

Figur 2 zeigt im Detail einen hinteren Ausschnitt des Fahrzeugs 1. Zu sehen sind eine linke Lenkeraufnahme 7, eine rechte Lenkeraufnahme 8 und eine mittige Lenkeraufnahme 9. Die drei Lenkeraufnahmen 7, 8, 9 bilden die Achsträgeranordnung 5. Die drei Lenkeraufnahmen 7, 8, 9 sind einzelne, nicht direkt miteinander verbundene Bauteile, insbesondere aus Aluminiumdruckguss oder faserverstärktem Kunststoff.

Des Weiteren zeigt Figur 2 eine linke Radaufhängung 10 und eine rechte Radaufhängung 11. Die beiden Radaufhängungen 10, 11 dienen zur Montage der beiden hinteren Räder 4.

Die linke Radaufhängung 10 ist über Lenker 12 mit der linken Lenkeraufnahme 7 und mit der mittigen Lenkeraufnahme 9 verbunden. Die rechte Radaufhängung 11 ist über Lenker 12 mit der rechten Lenkeraufnahme 8 und mit der mittigen Lenkeraufnahme 9 verbunden.

Des Weiteren weisen die beiden Radaufhängungen 10, 11 weitere Lenker 13 auf, die die Radaufhängungen 10, 11 direkt mit der Karosserie verbinden.

Ferner zeigt Figur 2 einen Ausschnitt des als Unterboden ausgebildeten Flächenbauteils 6. Das Flächenbauteil 6 setzt sich zusammen aus zumindest einem Plattenelement 14 und einer Versteifungsstruktur 15. Sowohl das Plattenelement 14 als auch die Versteifungsstruktur 15 erstrecken sich in der nahezu horizontalen Ebene. In der darauf senkrechten Ebene weist das Flächenbauteil 6 lediglich eine sehr geringe Dicke auf. Das Flächenbauteil 6 kann auch leicht gekrümmt oder in komplexer Geometrie - entsprechend den aerodynamischen Erfordernissen - ausgeführt sein.

Im Plattenelement 14 sind bevorzugt beidseitig Aussparungen 19 vorgesehen. Die Aussparungen 19 umgreifen teilweise die hinteren Räder 4. Dadurch bildet das Flächenbauteil 6 eine aerodynamisch optimierte Abdeckung des Fahrzeugs 1 im unteren Bereich.

Figur 2 zeigt des Weiteren eine elektrische Maschine 17, die zwischen den drei Lenkeraufnahmen 7, 8, 9 angeordnet ist. Jede der Lenkeraufnahmen 7, 8, 9 weist ein Lager 18 auf. Über diese Lager 18 ist die elektrische Maschine 17 an drei Punkten befestigt.

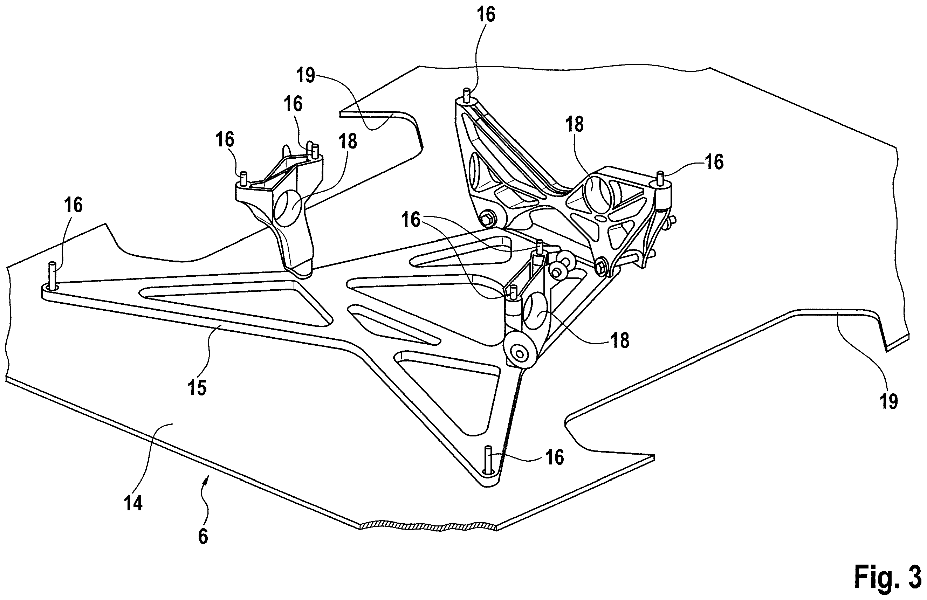

Figur 3 zeigt das gleiche Detail wie Figur 2, wobei in Figur 3 der Übersichtlichkeit halber die elektrische Maschine 17 und die beiden Radaufhängungen 10, 11 ausgeblendet sind. Insbesondere in Figur 3 sind Karosserieanbindungspunkte 16 gekennzeichnet. Über diese Karosserieanbindungspunkte 16 sind die drei Lenkeraufnahmen 7, 8, 9 und das Flächenbauteil 6, insbesondere die Versteifungsstruktur 15, direkt mit der Karosserie 2 verbunden.

Die Karosserieanbindungspunkte 16 sind als Verschraubungen ausgebildet. Insbesondere handelt es sich hierbei um steife Verschraubungen ohne Gummilager.

Die erfindungsgemäße Achsträgeranordnung 5 mit den drei Lenkeraufnahmen 7, 8, 9 ist für sich genommen keine feste, tragende Struktur, da die drei Lenkeraufnahmen 7, 8, 9 einzelne Bauteile darstellen. Erst die Verschraubung sowohl mit dem Flächenbauteil 6 als auch mit der Karosserie 2 führt zu einer tragenden Struktur, an die die beiden Radaufhängungen 10, 11 montiert werden können. Dieses Strukturkonzept weist keinerlei Redundanzen auf. Erst der Gesamtverband ist in der Lage, die auftretenden Betriebslasten zu verarbeiten. Da ein Großteil der Lasten über das als Schubfeld und Unterboden ausgebildete Flächenelement 6 verarbeitet wird, können die drei Lenkeraufnahmen 7, 8, 9 sehr leichtbauend konstruiert werden.

Das als Unterboden und Schubfeld ausgebildete Flächenbauteil 6 ist starr mit dem restlichen Fahrzeug 1 verschraubt und ermöglicht somit eine aerodynamisch optimale Gestaltung, um den Luftwiderstandswert des Fahrzeugs 1 nennenswert zu reduzieren.

Die Reduzierung der Biegeanteile in der Tragstruktur hilft den Bauraum zu minimieren. Dadurch ist es insbesondere möglich, die elektrische Maschine 17, auch mit Getriebe und Differential, zwischen den Lenkeraufnahmen 7, 8, 9 anzuordnen.

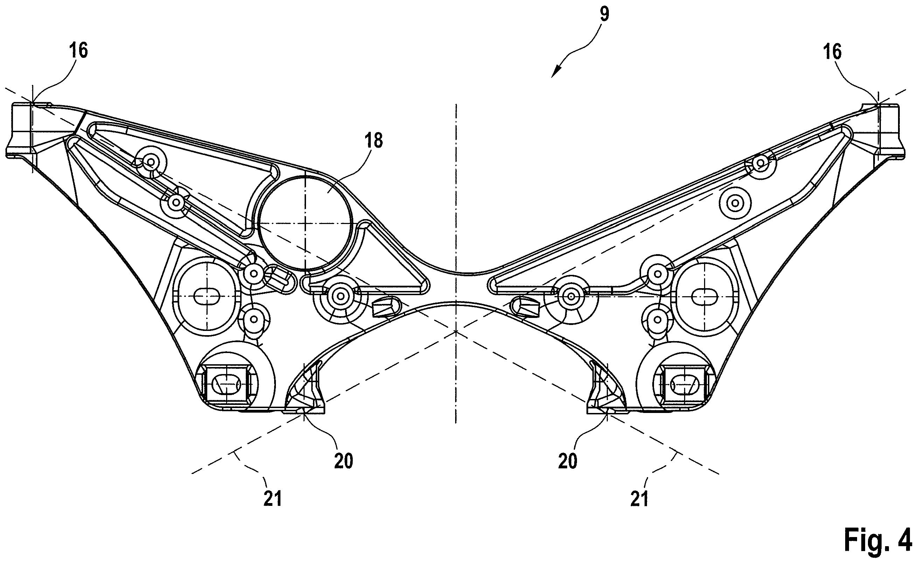

Figur 4 zeigt die mittige Lenkeraufnahme 9 im Detail. Über die beiden Karosserieanbindungspunkte 16 wird die mittige Lenkeraufnahme 9 mit der Karosserie 2 verschraubt. Über zwei Verbindungsstellen 20 wird die mittige Lenkeraufnahme 9 mit dem Flächenbauteil 6 verschraubt. Jeweils von einem Karosserieanbindungspunkt 16 zur gegenüberliegenden Verbindungsstelle 20 verläuft eine Hilfslinie 21. Für eine biegemomentfreie Ausgestaltung der mittigen Lenkeraufnahme 9 ist entlang eines Großteiles der gesamten Länge der beiden Hilfslinien 21 Material vorgesehen. Die mittige Lenkeraufnahme 9 ist hierzu vorzugsweise einstückig gefertigt. Am Lager 18 für die elektrische Maschine 17 ist die mittige Lenkeraufnahme 9 entlang einer Hilfslinie 21 ausgespart.

### Bezugszeichenliste:

- 1: Fahrzeug
- 2: Karosserie
- 3: Vordere Räder
- 4: Hintere Räder
- 5: Achsträgeranordnung
- 6: Flächenbauteil als Unterboden
- 7: Linke Lenkeraufnahme
- 8: Rechte Lenkeraufnahme
- 9: Mittige Lenkeraufnahme
- 10: Linke Radaufhängung
- 11: Rechte Radaufhängung
- 12: Lenker
- 13: Weiterer Lenker
- 14: Plattenelement
- 15: Versteifungsstruktur
- 16: Karosserieanbindungspunkte
- 17: Elektrische Maschine
- 18: Lager
- 19: Aussparungen
- 20: Verbindungsstellen
- 21: Hilfslinien

## Patentansprüche

1. Fahrzeug (1) umfassend eine Karosserie (2), ein unter der Karosserie (2) angeordnetes Flächenbauteil (6) und zumindest eine Achsträgeranordnung (5) für zwei vordere oder zwei hintere Radaufhängungen (10, 11), mit einer linken Lenkeraufnahme (7) zur Anbindung zumindest eines Lenkers (12) der linken Radaufhängung (10) und einer rechten Lenkeraufnahme (8) zur Anbindung zumindest eines Lenkers (12) der rechten Radaufhängung (11), wobei die beiden Lenkeraufnahmen (7, 8) jeweils an der Karosserie (2) und an dem Flächenbauteil (6) befestigt sind und das Flächenbauteil (6) als Unterboden-Abschnitt des Fahrzeugs ausgebildet ist,
**dadurch gekennzeichnet, dass** eine weitere mittige Lenkeraufnahme (9) zur Anbindung zumindest eines Lenkers (12) der linken Radaufhängung (10) und zumindest eines Lenkers (12) der rechten Radaufhängung (11) vorgesehen ist, welche an der Karosserie (2) und an dem Flächenbauteil (6) befestigt ist, und wobei die drei Lenkeraufnahmen (7, 8, 9) drei separate, nicht direkt miteinander verbundene Bauteile sind.

2. Fahrzeug nach Anspruch 1, **dadurch gekennzeichnet, dass** zumindest eine der Lenkeraufnahmen (7, 8, 9) steif, insbesondere ohne elastisches Lager, mit der Karosserie (2) verbunden, vorzugsweise verschraubt, ist.

3. Fahrzeug nach Anspruch 1 oder 2, **dadurch gekennzeichnet, dass** zumindest eine der Lenkeraufnahmen (7, 8, 9) steif, insbesondere ohne elastisches Lager, mit dem Flächenbauteil verbunden, vorzugsweise verschraubt, ist.

4. Fahrzeug nach einem der vorhergehenden Ansprüche, **dadurch gekennzeichnet, dass** das Flächenbauteil (6) zerstörungsfrei lösbar mit allen drei Lenkeraufnahmen (7, 8, 9) verbunden, vorzugsweise verschraubt, ist.

5. Fahrzeug nach einem der vorhergehenden Ansprüche, **dadurch gekennzeichnet, dass** die Karosserie (2) zerstörungsfrei lösbar mit allen drei Lenkeraufnahmen (7, 8, 9) verbunden, vorzugsweise verschraubt, ist.

6. Fahrzeug nach einem der vorhergehenden Ansprüche, **dadurch gekennzeichnet, dass** das Flächenbauteil (6) an zumindest einem Karosserieanbindungspunkt (16) zerstörungsfrei lösbar mit der Karosserie (2) verbunden, vorzugsweise verschraubt, ist.

7. Fahrzeug nach einem der vorhergehenden Ansprüche, **dadurch gekennzeichnet, dass** zumindest eine der Lenkeraufnahmen (7, 8, 9) ein Lager (18) für eine das Fahrzeug (1) antreibende elektrische Maschine (17) umfasst.

8. Fahrzeug nach einem der vorhergehenden Ansprüche, **dadurch gekennzeichnet, dass** das Flächenbauteil (6) strukturversteifend ausgebildet ist, so dass erst durch die Befestigung der Lenkeraufnahmen (7, 8, 9) an dem Flächenbauteil (6) und an der Karosserie (2) die Achsträgeranordnung (6) tragfähig ist.

9. Fahrzeug nach einem der vorhergehenden Ansprüche, **dadurch gekennzeichnet, dass** das Flächenbauteil (6) beidseitig Aussparungen (19) für Räder (4) des Fahrzeugs (1) aufweist.

10. Fahrzeug nach einem der vorhergehenden Ansprüche, **dadurch gekennzeichnet, dass** sich das Flächenbauteil (6) zumindest über 10%, vorzugsweise zumindest über 20%, besonders vorzugsweise zumindest über 30%, der Fläche einer senkrechten Projektion des Fahrzeugs erstreckt.

11. Fahrzeug nach einem der vorhergehenden Ansprüche, **dadurch gekennzeichnet, dass** das Flächenbauteil (6) eine maximale Dicke von 150 mm, vorzugsweise von 50 mm, besonders vorzugsweise von 20 mm, aufweist.

12. Fahrzeug nach einem der vorhergehenden Ansprüche, **dadurch gekennzeichnet, dass** das Flächenbauteil (6) ein Plattenelement (14) und eine auf das Plattenelement (14) aufgesetzte und/oder in dem Plattenelement (14) integrierte Versteifungsstruktur (15) umfasst.

13. Fahrzeug nach einem der vorhergehenden Ansprüche, **dadurch gekennzeichnet, dass** zumindest einer der Lenkeraufnahmen (7, 8, 9) und/oder das Flächenbauteil (6) aus Pressverbundmaterial oder Faserverbundwerkstoff, vorzugsweise aus faserverstärktem Kunststoff, gefertigt ist.

## Claims

1. A vehicle (1) comprising a body (2), a flat component (6) arranged under the body (2), and at least one axle carrier arrangement (5) for two front or two rear wheel suspensions (10, 11), having a left-hand suspension arm bracket (7) for connecting at least one suspension arm (12) of the left wheel suspension (10) and a right-hand suspension arm bracket (8) for connecting at least one suspension arm (12) of the right wheel suspension (11), wherein the two suspension arm brackets (7, 8) are each fastened to the body (2) and to the flat component (6), and the flat component (6) is formed as an underbody portion of the vehicle,
**characterised in that** a further central suspension arm bracket (9) for connecting at least one suspension arm (12) of the left wheel suspension (10) and at least one suspension arm (12) of the right wheel suspension (11) is provided and is fastened to the body (2) and to the flat component (6), and wherein the three suspension arm brackets (7, 8, 9) are three separate components not directly connected to one another.

2. A vehicle according to claim 1, **characterised in that** at least one of the suspension arm brackets (7, 8, 9) is connected, preferably screwed, to the body (2) in a rigid manner, more especially without any resilient bearing.

3. A vehicle according to claim 1 or 2, **characterised in that** at least one of the suspension arm brackets (7, 8, 9) is connected to the flat component, preferably screwed, in a rigid manner more especially without any resilient bearing.

4. A vehicle according to any one of the preceding claims,
**characterised in that** the flat component (6) is connected, preferably screwed, to all three suspension arm brackets (7, 8, 9) so as to be releasable non-destructively.

5. A vehicle according to any one of the preceding claims,
**characterised in that** the body (2) is connected, preferably screwed, to all three suspension arm brackets (7, 8, 9) so as to be releasable non-destructively.

6. A vehicle according to any one of the preceding claims,
**characterised in that** the flat component (6) is connected, preferably screwed, to the body (2) at least at one body connection point (16) so as to be releasable non-destructively.

7. A vehicle according to any one of the preceding claims,
**characterised in that** at least one of the suspension arm brackets (7, 8, 9) comprises a bearing (18) for an electric machine (17) driving the vehicle (1).

8. A vehicle according to any one of the preceding claims,
**characterised in that** the flat component (6) provides structural reinforcement, such that the axle carrier arrangement (5) is load-bearing only by fastening the suspension arm brackets (7, 8, 9) to the flat component (6) and to the body (2).

9. A vehicle according to any one of the preceding claims,
**characterised in that** the flat component (6) on both sides comprises recesses (19) for wheels (4) of the vehicle (1).

10. A vehicle according to any one of the preceding claims,
**characterised in that** the flat component (6) extends at least over 10%, preferably at least over 20%, more especially preferably at least over 30% of the area of an orthogonal projection of the vehicle.

11. A vehicle according to any one of the preceding claims,
**characterised in that** the flat component (6) has a maximum thickness of 150 mm, preferably of 50 mm, more especially preferably of 20 mm.

12. A vehicle according to any one of the preceding claims,
**characterised in that** the flat component (6) comprises a plate element (14) and a stiffening structure (15) placed on the plate element (14) and/or integrated in the plate element (14).

13. A vehicle according to any one of the preceding claims,
**characterised in that** at least one of the suspension arm brackets (7, 8, 9) and/or the flat component (6) is manufactured from pressed composite material or fibre composite material, preferably from fibre-reinforced plastic.

## Revendications

1. Véhicule (1) comprenant une carrosserie (2), un composant plat (6) monté au-dessous de la carrosserie (2) et au moins un dispositif de support d'essieu (5) pour deux suspensions de roue avant ou deux suspension de roue arrière (10, 11) avec un logement de bras de suspension gauche (7) pour la liaison d'au moins un bras (12) de la suspension de la roue gauche (10) et un logement de bras de suspension droit (8) pour la liaison d'au moins un bras (12) de la suspension de la roue droite (11), les deux logements de bras de suspension (7, 8) étant respectivement fixés à la carrosserie (2) et au composant plat (6), et le composant (6) étant réalisé sous la forme d'un segment de dessous de caisse du véhicule,
**caractérisé en ce qu'**
il est prévu un autre logement de réception de bras de suspension médian (9) pour la liaison d'au moins un bras (12) de la suspension de la roue gauche (10) et d'au moins un bras (12) de la suspension de la roue droite (11), qui est fixé à la carrosserie (2) et au composant plat (6), et les trois logements de bras de suspension (7, 8, 9) étant trois composants séparés non reliés directement les uns aux autres.

2. Véhicule conforme à la revendication 1,
**caractérisé en ce qu'**
au moins l'un des logements de bras de suspension (7, 8, 9) est relié rigidement de préférence vissé en particulier sans palier élastique avec la carrosserie (2).

3. Véhicule conforme à la revendication 1 ou 2,
**caractérisé en ce qu'**
au moins l'un des logements de bras de suspension (7, 8, 9) est relié rigidement, de préférence vissé, en particulier sans palier élastique avec le composant plat.

4. Véhicule conforme à l'une des revendications précédentes,
**caractérisé en ce que**
le composant plat (6) est relié, de préférence vissé en pouvant être séparé sans être endommagé avec les trois logements de bras de suspension (7, 8, 9).

5. Véhicule conforme à l'une des revendications précédentes,
**caractérisé en ce que**
la carrosserie (2) est reliée de préférence vissée en pouvant être séparée sans être endommagée avec les trois logements de bras de suspension (7, 8, 9).

6. Véhicule conforme à l'une des revendications précédentes,
**caractérisé en ce que**
le composant plat (6) est relié de préférence vissé en pouvant être séparé sans être endommagé à la carrosserie (2) au niveau d'au moins un point de liaison (16) avec celle-ci.

7. Véhicule conforme à l'une des revendications précédentes,
**caractérisé en ce qu'**
au moins un des logements de bras oscillant (7, 8, 9) comporte un palier de support (18) d'un moteur électrique (17) entraînant le véhicule (1).

8. Véhicule conforme à l'une des revendications précédentes,
**caractérisé en ce que**
le composant plat (6) est réalisé de façon à rigidifier la structure de sorte que le dispositif de support d'essieu (16) ne soit rendu porteur que par la fixation des logements de bras de suspension (7, 8, 9) sur ce composant plat (6) et sur la carrosserie (2).

9. Véhicule conforme à l'une des revendications précédentes,
**caractérisé en ce que**
le composant plat (6) comporte de part et d'autre des évidements (19) pour des roues (4) du véhicule (1).

10. Véhicule conforme à l'une des revendications précédentes,
**caractérisé en ce que**
le composant plat (6) s'étend au moins sur 10%, de préférence sur au moins sur 20% et de façon particulièrement préférentielle sur au moins 30% de la surface de la projection orthogonale du véhicule.

11. Véhicule conforme à l'une des revendications précédentes,
**caractérisé en ce que**
le composant plat (6) a une épaisseur maximum de 150 mm, de préférence de 50 mm et de manière particulièrement préférentielle, de 20 mm.

12. Véhicule conforme à l'une des revendications précédentes,
**caractérisé en ce que**
le composant plat (6) comporte un élément en forme de plaque (14) et une structure de renfort (15) appliquée sur l'élément en forme de plaque (14) et/ou intégrée dans cet élément en forme de plaque (14).

13. Véhicule conforme à l'une des revendications précédentes,
**caractérisé en ce qu'**
au moins l'un des logements de bras de suspension (7, 8, 9) et/ou le composant plat (6) est(sont) réalisé(s) en un matériau composite moulé ou en un matériau composite à base de fibres et de préférence en un matériau synthétique renforcé par des fibres.
